# FASCICULE DE BREVET EUROPEEN

(11) **EP 3 662 565 B1**
(45) Date de publication et mention de la délivrance du brevet: **01.09.2021**
(21) Numéro de dépôt: 18737321.2
(22) Date de dépôt: 12.07.2018
(51) Int. Cl.: H02K 5/10, F16B 21/07

(54) **MACHINE ÉLECTRIQUE TOURNANTE MUNIE D'UN CAPOT DE PROTECTION FIXÉ PAR ENCLIQUETAGE**
ELEKTRISCHE DREHMASCHINE MIT EINER DURCH SCHNAPPBEFESTIGUNG BEFESTIGTEN SCHUTZABDECKUNG
ROTARY ELECTRIC MACHINE EQUIPPED WITH A PROTECTIVE COVER FASTENED BY SNAP-FASTENING

(30) Priorité: 03.08.2017 FR 1757448
(43) Date de publication de la demande: 10.06.2020
(73) Titulaire: Valeo Equipements Electriques Moteur, 94046 Créteil Cedex (FR)
(72) Inventeur: GUIBERT, Pierre-Henri, 62630 Etaples sur Mer (FR); COLLIER, Grégory, 62630 Etaples sur Mer (FR)
(74) Mandataire: Ricard, Amandine
(86) Numéro de dépôt international: PCT/EP2018/069038
(87) Numéro de publication internationale: WO 2019/025158

(56) Documents cités:
- EP-A1- 2 020 734
- DE-C1- 4 134 201
- FR-A1- 2 777 050

## Description

L'invention porte sur une machine électrique tournante munie d'un capot de protection fixé par encliquetage. L'invention trouve une application particulièrement avantageuse, mais non exclusive, dans le domaine des alternateurs pour véhicules automobiles.

Un tel alternateur transforme de l'énergie mécanique en énergie électrique et peut être réversible. Un tel alternateur réversible est appelé alterno-démarreur et permet de transformer de l'énergie électrique en énergie mécanique notamment pour démarrer le moteur thermique du véhicule. L'invention pourra également être mise en œuvre avec un moteur électrique.

De façon connue en soi, une machine électrique tournante comporte un carter et, à l'intérieur de celui-ci, un rotor à griffes, solidaire en rotation d'un arbre, et un stator qui entoure le rotor avec présence d'un entrefer.

Le rotor peut être un rotor à griffe comportant deux roues polaires et un noyau autour duquel est enroulée une bobine d'excitation. Alternativement, le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés dont les extrémités correspondant à des sorties de phase sont reliées à un module électronique de commande comportant notamment un pont redresseur dans le cas d'un alternateur et le cas échéant un onduleur.

Un capot est monté autour du module électronique de commande pour protéger le module contre les salissures et les projections de liquide lors de l'utilisation du véhicule ainsi que contre d'éventuels chocs.

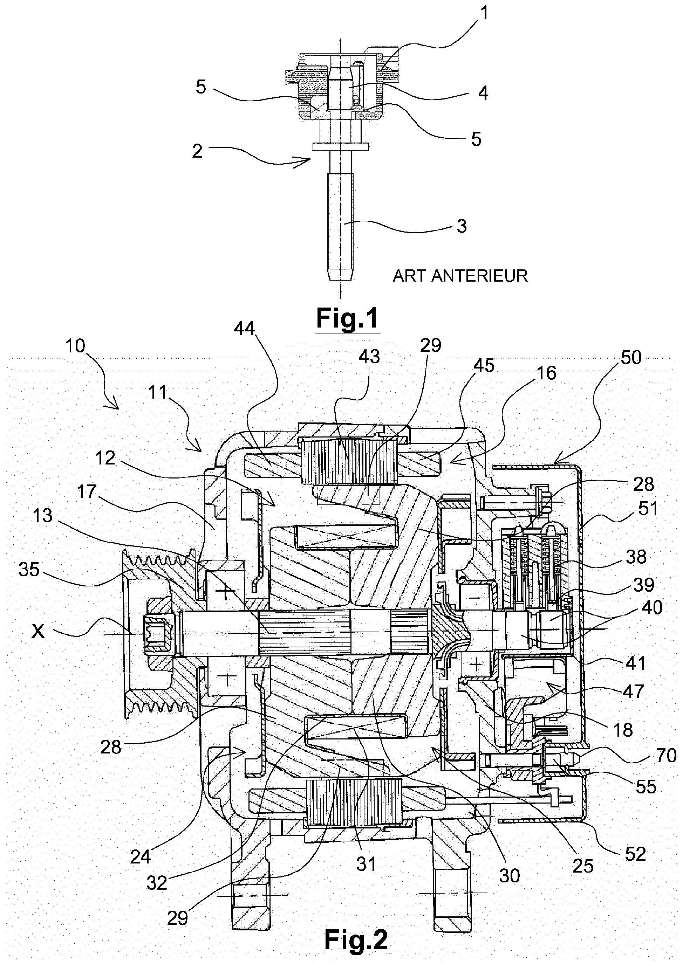

Comme on peut le voir sur la figure 1, la fixation du capot 1 peut être effectuée au moyen d'une vis 2 munie d'un double filetage. Une partie filetée 3 permet de visser le module électronique de commande sur le palier arrière, l'autre partie filetée 4 permet de fixer le capot 1 par encliquetage de languettes 5 du capot 1 sur les filets de la partie 4.

Toutefois, ce type de fixation n'est pas robuste dans le temps. En effet, lors des essais en vibration, ou sur le véhicule après un certain nombre de kilomètres de roulage, on observe une usure du plastique en contact avec les filets qui viennent limer les languettes à cause des vibrations du moteur thermique. Cela peut engendrer le détachement du capot de protection 1 de ses organes de fixation.

En outre, il n'est généralement pas possible de réutiliser un capot 1 démonté lors d'une retouche sur ligne d'assemblage, car son démontage engendre une cassure des languettes 5.

Les documents EP2020734, FR2777050 et DE4134201 décrivent différentes solutions de montage d'un élément tel qu'un capot muni de pâtes de fixation via un élément de fixation tel qu'une vis.

L'invention vise à remédier efficacement à au moins un de ces inconvénients en proposant une machine électrique tournante pour véhicule automobile. Selon l'invention, la machine comporte un carter, un ensemble électronique monté sur le carter, un capot de protection positionné autour de l'ensemble électronique et une vis s'étendant suivant un axe et permettant la fixation du capot sur le carter et/ou l'ensemble électronique. Toujours selon l'invention, le capot de protection comporte au moins une ouverture formant une zone de fixation dans laquelle s'étendent au moins une languette délimitant une ouverture centrale pour le passage de la vis. En outre, la vis comporte une tête de vis et une gorge de retenue de sorte que les languettes viennent se loger dans ladite gorge.

L'invention permet ainsi, grâce à la présence de la gorge de retenue, d'assurer un maintien de la languette sans que celle-ci ne puisse subir une usure trop sévère pouvant mener au détachement du capot de protection, comme cela est le cas avec le système de l'état de la technique mettant en frottement des languettes avec une zone filetée de la vis.

Selon une réalisation, la tête de vis et la gorge de retenue sont dépourvues de portion filetée.

Selon une réalisation, la languette est en appui contre un épaulement de la tête de vis délimitant une extrémité axiale de la gorge de retenue.

Selon une réalisation, l'épaulement s'étend en saillie de manière sensiblement radiale par rapport à l'axe de la vis. Autrement dit, l'épaulement s'étend dans un plan radial.

Par exemple la gorge et l'épaulement s'étendent sur toute la circonférence de la vis.

L'épaulement présente notamment une épaisseur, mesurée dans une direction radiale par rapport à l'axe de la vis depuis une périphérie externe de la gorge de retenue, comprise entre 0.1mm et 1mm et de préférence de l'ordre de 0.5mm.

Selon une réalisation, la languette est flexible.

En l'occurrence, chaque zone de fixation comporte au moins deux languettes. Par exemple, les languettes sont réparties régulièrement sur la circonférence de la zone de fixation.

Selon une réalisation, la tête de vis présente une surface radiale externe inclinée par rapport à l'axe et la languette présente une surface radiale interne, délimitant l'ouverture centrale, inclinée par rapport à l'axe de manière complémentaire à l'inclinaison de ladite surface externe de la tête de vis. De telles formes permettent d'assurer un maintien du capot de protection lors des déplacements d'une platine de montage de la machine électrique avant encliquetage complet du capot. En l'occurrence, la tête de vis et l'ouverture du capot de protection présentent des formes tronconiques complémentaires.

Selon une réalisation, un angle d'ouverture défini entre deux droites passant par la surface radiale externe de la tête de vis, lesdites droites étant opposées l'une de l'autre par rapport à l'axe est compris entre 10 degrés et 45 degrés, et vaut de préférence 30 degrés.

Selon l'invention, le capot de protection comporte au moins une nervure de démontage inclinée par rapport à l'axe. Cette nervure permet de démonter le capot de protection sans l'endommager et ainsi de pouvoir le remonter après une opération de maintenance de la machine ou encore de le réutiliser sur une autre machine si la première est défectueuse. En l'occurrence, le capot comporte une pluralité de nervures répartie sur la circonférence de la zone de fixation.

Selon une réalisation, une épaisseur radiale de la nervure de démontage est au moins égale, de préférence supérieure, à l'épaisseur de l'épaulement. Par exemple, l'épaisseur de la nervure de démontage est comprise entre 0.1 mm et 1mm et vaut de préférence 0.6mm.

Selon une réalisation, un angle d'inclinaison de la nervure de démontage par rapport à l'axe est compris entre 5 et 15 degrés et vaut de préférence 10 degrés.

Selon une réalisation, une longueur axiale de la nervure de démontage est comprise entre 2mm et 6mm et vaut de préférence 4mm.

Selon une réalisation, une languette est issue d'une extrémité d'une paroi s'étendant à partir de l'ouverture de la zone de fixation de manière à délimiter un puits de réception de la tête de vis.

Selon une réalisation, la seconde portion de la vis comporte un tronçon de préhension par un outil de vissage et une portion filetée permettant le maintien de la vis sur le carter et/ou l'ensemble électronique.

Selon une réalisation, le capot de protection comporte plusieurs zones de fixation, chaque zone étant traversée par une vis.

Selon une réalisation, la machine électrique tournante forme un alternateur ou un alterno-démarreur ou une machine réversible ou encore un moteur électrique.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une vue en coupe d'un système d'encliquetage du capot de protection sur une vis de montage de la machine électrique tournante selon l'état de la technique.

La figure 2 est une vue en coupe longitudinale d'une machine électrique tournante selon la présente invention.

La figure 3 est une vue en perspective d'un exemple d'assemblage selon l'invention entre un capot de protection et une vis.

La figure 4 est une vue de côté de la vis permettant l'encliquetage du capot de protection selon un exemple de mise en œuvre de l'invention.

Les figures 5a et 5b sont des vues en coupe du capot de protection et de la vis respectivement avant et après encliquetage du capot de protection selon l'exemple de la figure 3.

La figure 6 est une vue de dessus de la zone de fixation du capot de protection selon un exemple de réalisation.

La figure 7 est une vue en coupe suivant l'axe F-F de la figure 6 illustrant un exemple de forme des nervures de démontage.

Sur les figures 2 à 7, les éléments identiques, similaires, ou analogues conservent la même référence d'une figure à l'autre.

On a représenté sur la figure 2 un alternateur 10 compact et polyphasé, notamment pour véhicule automobile. L'alternateur 10 est apte à transformer de l'énergie mécanique en énergie électrique et pourra être réversible. Un tel alternateur réversible, appelé alterno-démarreur, permet de transformer de l'énergie électrique en énergie mécanique notamment pour démarrer le moteur thermique du véhicule.

Cet alternateur 10 comporte un carter 11 et, à l'intérieur de celui-ci, un rotor à griffes 12 monté sur un arbre 13, et un stator 16, qui entoure le rotor 12 avec présence d'un entrefer. L'axe X suivant lequel s'étend l'arbre 13 forme l'axe de la machine électrique.

Le carter 11 comporte des paliers avant 17 et arrière 18 portant le stator 16. Les paliers 17, 18 sont de forme creuse et portent chacun centralement un roulement à billes pour le montage à rotation de l'arbre 13.

Plus précisément, le rotor 12 comporte deux roues polaires 24, 25 présentant chacune un flasque 28 d'orientation transversale pourvu à sa périphérie externe de griffes 29 par exemple de forme trapézoïdale et d'orientation axiale. Les griffes 29 d'une roue 24, 25 sont dirigées axialement vers le flasque 28 de l'autre roue. La griffes 29 d'une roue polaire 24, 25 pénètrent dans l'espace existant entre deux griffes 29 voisines de l'autre roue polaire, de sorte que les griffes 29 des roues polaires 24, 25 sont imbriquées les unes par rapport aux autres.

Un noyau cylindrique 30 est intercalé axialement entre les flasques 28 des roues 24, 25. En l'occurrence, le noyau 30 consiste en deux deminoyaux appartenant chacun à l'un des flasques 28. Ce noyau 30 porte à sa périphérie externe un bobinage d'excitation 31 bobiné dans un isolant 32 intercalé radialement entre le noyau 30 et la bobine 31.

L'arbre 13 pourra être emmanché à force dans l'alésage central des roues polaires 24, 25. Du côté de son extrémité avant, l'arbre 13 porte une poulie 35 appartenant à un dispositif de transmission de mouvements à au moins une courroie entre l'alternateur 10 et le moteur thermique du véhicule automobile.

Le palier arrière 18 porte un porte-balais 38 muni de balais 39 destinés à venir frotter contre des bagues 40 d'un collecteur 41 pour assurer l'alimentation du bobinage du rotor 12.

Par ailleurs, le stator 16 comporte un corps 43 en forme d'un paquet de tôles doté d'encoches équipées d'isolant d'encoches pour le montage des phases du stator 16. Chaque phase comporte au moins un enroulement traversant les encoches du corps de stator 43 et forme, avec toutes les phases, un chignon avant 44 et un chignon arrière 45 de part et d'autre du corps de stator 43.

Les enroulements de phase sont obtenus par exemple à partir d'un fil continu recouvert d'émail ou à partir d'éléments conducteurs en forme d'épingles reliées électriquement entre elles par exemple par soudage.

Chaque enroulement de phase comporte une extrémité formant une sortie de phase reliée à un ensemble électronique 47. Cet ensemble 47 comporte notamment un onduleur et/ou un pont redresseur constitué par exemple par des diodes ou des transistors du type MOSFET et peut également comporte un module de commande. L'ensemble 47 comporte un dissipateur thermique permettant le refroidissement des modules électroniques et/ou des diodes. L'ensemble électronique, en particulier le dissipateur thermique, est monté sur le palier arrière 18 par l'intermédiaire d'au moins une vis 55.

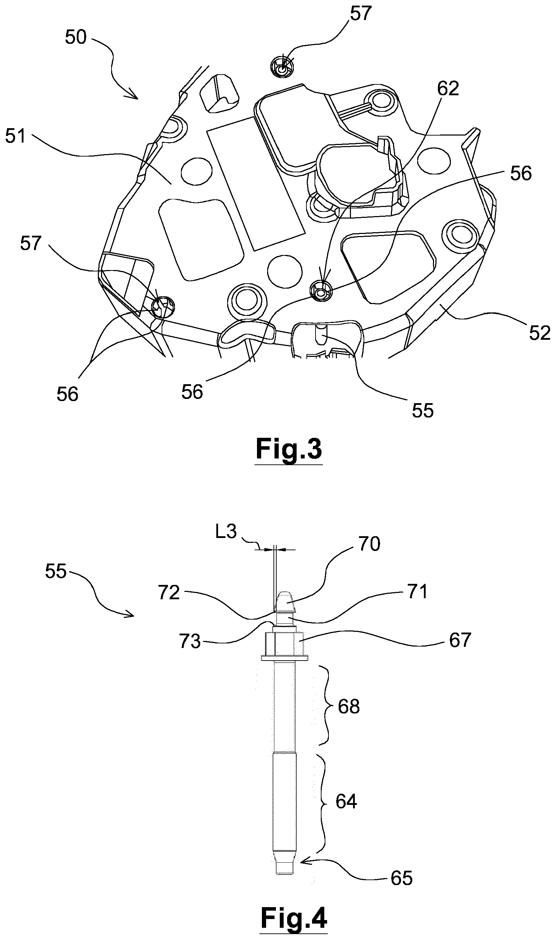

Un capot de protection 50 est positionné autour de l'ensemble électronique 47 pour le protéger des salissures et des projections de liquide lors de l'utilisation du véhicule automobile. Comme cela est visible sur la figure 3, le capot 50 comporte une paroi 51 d'orientation radiale et un rebord 52 d'orientation axiale par rapport à l'axe X. Ce capot 50 est fixé par encliquetage sur des vis de fixation 55.

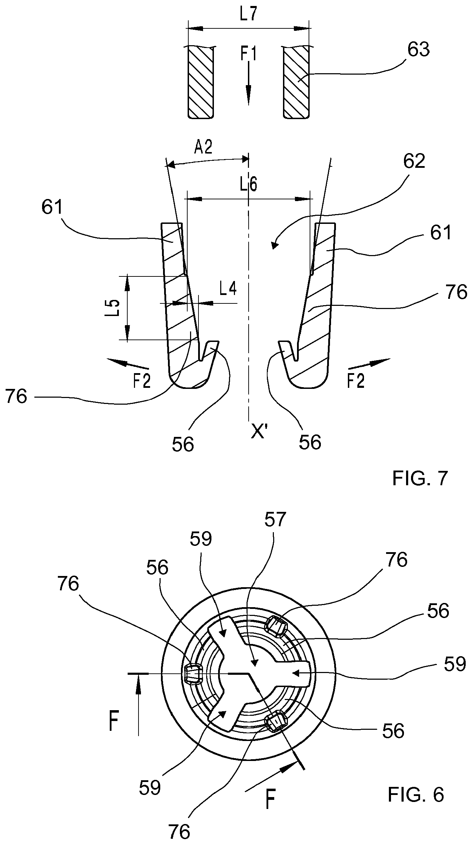

Dans l'exemple représenté ici, le capot de protection 50 comporte des ouvertures formant des zones de fixation. Chaque zone de fixation comporte trois languettes flexibles 56 délimitant une ouverture centrale 57 destinée à recevoir la tête d'une vis 55 décrite plus en détails ci-après. En l'occurrence, on prévoit plusieurs zones de fixation, par exemple trois, délimitée chacune par trois languettes 56. Les languettes 56 sont séparées entre elles par des fentes de séparation référencées 59, tel que cela est montré sur la figure 6. Par exemple, les languettes sont réparties régulièrement sur la circonférence de la zone de fixation et donc, ici, espacées de 120° les unes des autres.

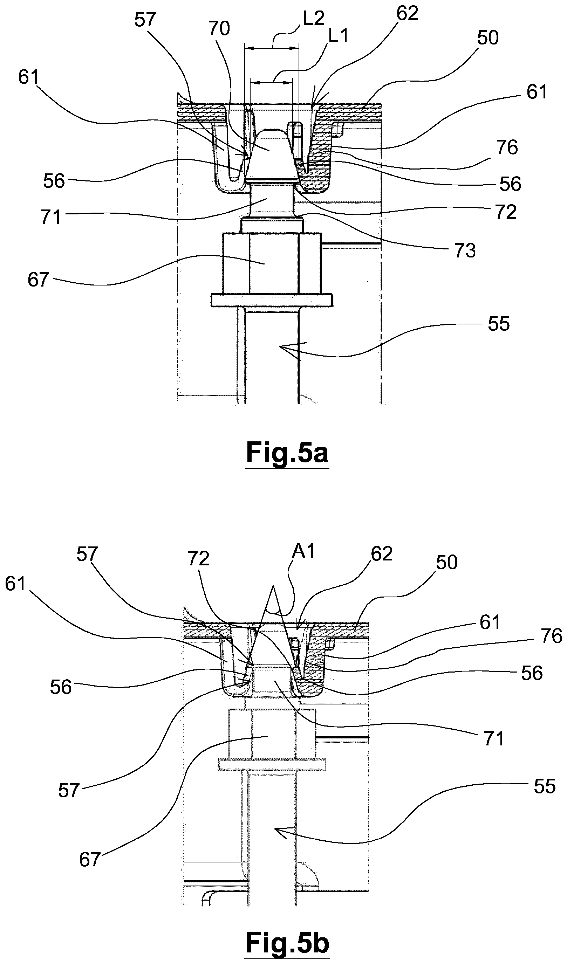

Dans l'exemple représenté sur les figures 5a et 5b, une languette 56 est issue d'une extrémité d'une paroi 61 délimitant un puits de réception 62 de la tête de vis. Par exemple, la paroi 61 s'étend en saillie à partir de la paroi radiale 51 du capot 50 et présente une forme de cylindre. Par rapport à la paroi radiale 51, les parois 61 du puits 62 sont dirigées axialement vers l'ensemble électronique 47. Les languettes 56 s'étendent en saillie à partir de l'extrémité inférieure de la paroi 61 vers la paroi 51 du capot. Alternativement, les fentes de séparation 59 peuvent également s'étendre sur la paroi 61 de sorte que chaque languette forme un rebord de chaque paroi correspondante 61 dirigée vers l'extrémité ouverte du puits 62.

Le capot 50 est de préférence formé d'un matériau plastique. Les languettes 56, les parois 61, la paroi 51 et le rebord 52 sont monoblocs et formés par moulage, c'est-à-dire issues de matière ensemble.

Par ailleurs, comme cela est illustré sur l'exemple de la figure 4, la vis 55 comporte une première portion permettant le maintien du capot et une seconde portion permettant la fixation de la vis sur le carter et l'ensemble électronique. Ainsi, dans cet exemple, la seconde portion de la vis permet la fixation de l'ensemble électronique 47 sur le carter 11 et en particulier sur le palier arrière 18. La vis s'étend suivant un axe X', cet axe est de préférence sensiblement parallèle à l'axe X de l'alternateur 10. On entend par sensiblement parallèle qu'un angle entre ces deux axes est compris entre 0 et 20 degrés. En variante, l'axe X' peut être sensiblement perpendiculaire ou incliné par rapport à l'axe X.

La seconde portion de la vis est munie d'un tronçon fileté 64 pour la fixation du dissipateur thermique sur le palier arrière 18. Un embout pilote 65 permet de faciliter la mise en place de la vis 55 dans le trou de fixation du palier 18 avant vissage de la vis 55. En outre, un tronçon de préhension 67, par exemple de type à six pans, est ménagé dans la seconde portion de la vis 55 pour permettre la manipulation de la vis 55 par un outil de vissage automatique. Ce tronçon de préhension est par exemple positionné de manière adjacente à la première portion de la vis. Le tronçon fileté 64 pourra s'étendre jusqu'au tronçon de préhension 67. En variante, la vis 55 peut comporter une zone lisse 68 non filetée entre le tronçon fileté 64 et le tronçon de préhension 67.

La première portion de la vis 55 comporte une tête 70 et une gorge de retenue 71. La gorge de retenue 71 est délimitée axialement d'une part, par un épaulement 72 de la tête de vis 70 et d'autre part, par un épaulement 73 situé du côté du tronçon de préhension 67. Cet épaulement 73 peut en variante être constitué par une face radiale du tronçon de préhension 67.

La tête de vis 70 est destinée à s'insérer à l'intérieur de l'ouverture centrale 57 délimitée par les languettes 56, de sorte que les languettes flexibles 56 viennent se loger dans la gorge de retenue 71, tel que cela est illustré par la figure 5b. Lorsque le capot 50 est monté, les languettes 56 sont en appui contre l'épaulement 72 de la tête de vis 70. A cet effet, le diamètre interne L1 de l'ouverture 57 mesuré au niveau de l'extrémité libre des languettes 56 est légèrement inférieur au diamètre externe L2 de l'épaulement 72, tel que montré en figure 5a.

Dans un exemple de réalisation, l'épaulement 72 présente une épaisseur radiale par rapport à l'axe X' L3 (cf. figure 4) mesurée depuis une périphérie externe de la gorge 71 comprise entre 0.1mm et 1mm, de préférence de l'ordre de 0.5mm. Cette épaisseur L3 est mesurée suivant une direction radiale par rapport à l'axe X' de la vis 55.

Dans l'exemple représenté ici, la tête de vis 70 et l'ouverture 57 du capot de protection 50 présentent des formes tronconiques complémentaires. La tête de vis 70 présente ainsi une section circulaire dans un plan radial par rapport à l'axe X' dont le diamètre diminue lorsque l'on se déplace de l'épaulement 72 de la tête de vis 70 vers son extrémité libre. De manière strictement équivalente, la tête de vis 70 pourrait présenter une section variable de forme polygonale. Selon un exemple de réalisation, la forme tronconique de la tête 70 présente un angle d'ouverture A1 compris entre 10 degrés et 45 degrés, et valant de préférence 30 degrés, tel que cela est illustré par la figure 5b.

Comme on peut le voir sur les figures 6 et 7 notamment, le capot de protection 50 comporte des nervures 76 inclinées de démontage pour permettre le démontage du capot 50 par rapport à la vis 55. Ces nervures 76 s'étendent en saillie radiale depuis les parois 61 délimitant le puits de réception 62 de la tête de vis 70. De préférence, les nervures sont issues de matière avec la paroi 61. Par exemple, la zone de fixation comporte autant de nervure que de languettes.

A cette fin, une épaisseur L4 dans une direction radiale par rapport à l'axe X' de la nervure de démontage 76 est au moins égale, de préférence supérieure, à l'épaisseur de l'épaulement 72. Par exemple, l'épaisseur L4 de la nervure 76 est comprise entre 0.1mm et 1mm, et vaut de préférence 0.6mm. Un angle d'inclinaison A2 d'une nervure 76 par rapport à un axe X' est compris entre 5 et 15 degrés et vaut de préférence 10 degrés. Une longueur axiale L5 d'une nervure 76 est comprise entre 2mm et 6mm et vaut de préférence 4mm. Ces dimensions sont données à titre illustratif et l'homme du métier comprendra qu'elles peuvent être adaptées notamment en fonction de l'épaisseur de l'épaulement et de l'inclinaison et de la longueur axiale des languettes.

On décrit ci-après, en référence avec les figures 5a et 5b, le montage et le démontage du capot de protection 50 sur la vis de fixation 55. Cette vis 55 permet de réaliser une double fonction, à savoir fixer l'ensemble électronique 47 sur le palier 18 et maintenir par encliquetage le capot de protection 50.

Dans un premier temps, la vis 50 est mise en place dans des ouvertures respectives du dissipateur thermique et du palier arrière, l'ouverture du palier arrière comprenant une portion taraudée correspondant au filetage de la seconde portion de la vis pour monter l'ensemble électronique sur le carter.

Ensuite, comme cela est montré sur la figure 5a, le capot de protection 50 est mis en place, de telle façon qu'une tête de vis 70 coopère avec une ouverture 57 du capot 50. La tête de vis 70 n'est pas complètement insérée à l'intérieur de l'ouverture centrale 57 mais en partie uniquement, de sorte que cela permet d'assurer une retenue radiale et circonférentielle du capot de protection 50 lors des déplacements de la platine de montage de la machine électrique d'un poste à l'autre.

On réalise ensuite un encliquetage complet du capot 50 en faisant pénétrer la tête de vis 70 à l'intérieur de l'ouverture 57 jusqu'à ce que les languettes 56 se situent à l'intérieur de la gorge 71 et que leur extrémité libre vienne en appui contre l'épaulement 72, comme cela est visible sur la figure 5b. La tête de vis 70 est alors située à l'intérieur du puits 62 de manière à ne pas faire saillie par rapport au capot 50, comme on peut le voir en figure 3.

Lors d'une opération de maintenance de l'ensemble électronique 47 nécessitant le retrait du capot de protection 50, l'opérateur peut insérer à l'intérieur du puits 62 un outil 63 de forme cylindrique creuse pour passer autour de la tête de vis 70.

Comme illustré par la figure 7, cet outil 63 présente un diamètre externe L7 sensiblement égal au diamètre L6 du puits 62 mesuré à l'entrée de la pente de la nervure 76, c'est-à-dire à l'extrémité axiale de la nervure la plus proche de la paroi 51 du capot 50. L'outil 63 est inséré suivant toute la longueur axiale L5 de la nervure 76 dans le sens indiqué par la flèche F1, ce qui a pour effet d'écarter les languettes 56, dans la direction des flèches F2, par rapport à l'épaulement 72 d'une distance radiale suffisante pour supprimer l'appui contre l'épaulement 72 et permettre un retrait du capot 50 sans résistance axiale des languettes 56.

Bien entendu, la description qui précède a été donnée à titre d'exemple uniquement et ne limite pas le domaine de l'invention. Par exemple, on ne sortira pas du cadre de l'invention en supprimant le puits de réception 62. Dans cet exemple, la zone de fixation ne comporte pas de paroi 61 et les languettes s'étendent directement à partir de la paroi 51.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante pour véhicule automobile, la machine (10) comporte :
- un carter (11),
- un ensemble électronique (47) monté sur le carter,
- un capot de protection (50) positionné autour de l'ensemble électronique (47), et
- une vis (55) s'étendant suivant un axe (X') et permettant la fixation du capot (50) sur le carter (11) et/ou l'ensemble électronique (47) ;
dans laquelle le capot de protection (50) comporte au moins une ouverture formant une zone de fixation dans laquelle s'étendent au moins une languette (56) délimitant une ouverture centrale (57) pour le passage de la vis (55) et dans laquelle la vis (55) comporte une tête de vis (70) et une gorge de retenue (71) de sorte que les languettes (56) viennent se loger dans ladite gorge (71),
**caractérisé par** le capot de protection (50) comportant au moins une nervure de démontage (76) inclinée par rapport à l'axe (X') pour permettre le démontage du capot (50) par rapport à la vis (55).

2. Machine électrique tournante selon la revendication 1, **caractérisée en ce que** la languette (56) est en appui contre un épaulement (72) de la tête de vis (70) délimitant une extrémité axiale de la gorge de retenue (71).

3. Machine électrique tournante selon la revendication 2, **caractérisée en ce que** l'épaulement (72) s'étend en saillie de manière sensiblement radiale par rapport à l'axe (X') de la vis.

4. Machine électrique tournante selon l'une quelconque des revendications 1 à 3, **caractérisée en ce que** la languette (56) est flexible.

5. Machine électrique tournante selon l'une quelconque des revendications 1 à 4, **caractérisée en ce que** la tête de vis (70) présente une surface radiale externe inclinée par rapport à l'axe (X') et **en ce que** la languette (56) présente une surface radiale interne, délimitant l'ouverture centrale (57), inclinée par rapport à l'axe (X') de manière complémentaire à l'inclinaison de ladite surface externe de la tête de vis.

6. Machine électrique tournante selon la revendication 5, **caractérisée en ce qu'**un angle d'ouverture (A1) défini entre deux droites passant par la surface radiale externe de la tête de vis (70), lesdites droites étant opposées l'une de l'autre par rapport à l'axe (X'), est compris entre 10 degrés et 45 degrés, et vaut de préférence 30 degrés.

7. Machine électrique tournante selon l'une quelconque des revendications précédentes, **caractérisée en ce qu'**une épaisseur radiale (L4) de la nervure de démontage (76) est au moins égale, de préférence supérieure, à une épaisseur radiale (L3) de l'épaulement (72).

8. Machine électrique tournante selon l'une quelconque des revendications précédentes, **caractérisée en ce qu'**un angle d'inclinaison (A2) de la nervure de démontage (76) par rapport à l'axe (X') est compris entre 5 et 15 degrés et vaut de préférence 10 degrés.

9. Machine électrique tournante selon l'une quelconque des revendications précédentes, **caractérisée en ce qu'**une longueur axiale (L5) de la nervure de démontage (76) est comprise entre 2mm et 6mm et vaut de préférence 4mm.

10. Machine électrique tournante selon l'une quelconque des revendications 1 à 9, **caractérisée en ce que** la languette (56) est issue d'une extrémité d'une paroi (61) s'étendant à partir de l'ouverture de la zone de fixation de manière à délimiter un puits de réception (62) de la tête de vis (70).

## Patentansprüche

1. Elektrische Drehmaschine für ein Kraftfahrzeug, wobei die Maschine (10) Folgendes umfasst:
- ein Gehäuse (11),
- eine Elektronikeinheit (47), die an dem Gehäuse montiert ist,
- eine Schutzabdeckung (50), die um die Elektronikeinheit (47) angeordnet ist, und
- eine Schraube (55), die sich gemäß einer Achse (X') erstreckt und die Befestigung der Abdeckung (50) an dem Gehäuse (11) und/oder der Elektronikeinheit (47) gestattet;
wobei die Schutzabdeckung (50) mindestens eine Öffnung umfasst, die einen Befestigungsbereich bildet, in dem sich mindestens eine Lasche (56) erstreckt, die eine zentrale Öffnung (57) für den Durchgang der Schraube (55) begrenzt, und wobei die Schraube (55) einen Schraubenkopf (70) und eine Haltenut (71) umfasst, sodass die Laschen (56) in der Nut (71) zu liegen kommen,
**dadurch gekennzeichnet, dass** die Schutzabdeckung (50) mindestens eine Demontagerippe (76) umfasst, die mit Bezug auf die Achse (X') geneigt ist, um die Demontage der Abdeckung (50) mit Bezug auf die Schraube (55) zu gestatten.

2. Elektrische Drehmaschine nach Anspruch 1, **dadurch gekennzeichnet, dass** die Lasche (56) an einem Absatz (72) des Schraubenkopfes (70) anliegt, der ein axiales Ende der Haltenut (71) begrenzt.

3. Elektrische Drehmaschine nach Anspruch 2, **dadurch gekennzeichnet, dass** der Absatz (72) mit Bezug auf die Achse (X') der Schraube im Wesentlichen radial vorsteht.

4. Elektrische Drehmaschine nach einem der Ansprüche 1 bis 3, **dadurch gekennzeichnet, dass** die Lasche (56) biegsam ist.

5. Elektrische Drehmaschine nach einem der Ansprüche 1 bis 4, **dadurch gekennzeichnet, dass** der Schraubenkopf (70) eine radiale Außenfläche aufweist, die mit Bezug auf die Achse (X') geneigt ist, und dass die Lasche (56) eine radiale Innenfläche aufweist, die die zentrale Öffnung (57) begrenzt und komplementär zu der Neigung der Außenfläche des Schraubenkopfes mit Bezug auf die Achse (X') geneigt ist.

6. Elektrische Drehmaschine nach Anspruch 5, **dadurch gekennzeichnet, dass** ein Öffnungswinkel (A1), der zwischen zwei Geraden, die entlang der radialen Außenfläche des Schraubenkopfes (70) verlaufen, definiert wird, wobei die Geraden mit Bezug auf die Achse (X') einander gegenüberliegen, zwischen 10 Grad und 45 Grad liegt und vorzugsweise 30 Grad beträgt.

7. Elektrische Drehmaschine nach einem der vorhergehenden Ansprüche, **dadurch gekennzeichnet, dass** eine radiale Dicke (L4) der Demontagerippe (76) mindestens gleich und vorzugsweise größer als eine radiale Dicke (L3) des Absatzes (72) ist.

8. Elektrische Drehmaschine nach einem der vorhergehenden Ansprüche, **dadurch gekennzeichnet, dass** ein Neigungswinkel (A2) der Demontagerippe (76) mit Bezug auf die Achse (X') zwischen 5 und 15 Grad liegt und vorzugsweise 10 Grad beträgt.

9. Elektrische Drehmaschine nach einem der vorhergehenden Ansprüche, **dadurch gekennzeichnet, dass** eine axiale Länge (L5) der Demontagerippe (76) zwischen 2 mm und 6 mm liegt und vorzugsweise 4 mm beträgt.

10. Elektrische Drehmaschine nach einem der Ansprüche 1 bis 9, **dadurch gekennzeichnet, dass** die Lasche (56) aus einem Ende einer Wand (61) hervorgeht, die sich von der Öffnung des Befestigungsbereichs erstreckt, um einen Aufnahmeschaft (62) des Schraubenkopfes (70) zu begrenzen.

## Claims

1. Rotating electrical machine for a motor vehicle, the machine (10) comprises:
- a casing (11),
- an electronic assembly (47) mounted on the casing,
- a protective cover (50) positioned around the electronic assembly (47), and
- a screw (55) extending along an axis (X') and allowing the cover (50) to be fastened on the casing (11) and/or the electronic assembly (47);
wherein the protective cover (50) comprises at least one aperture forming a fastening zone in which extend at least one tongue (56) delimiting a central aperture (57) for the passage of the screw (55) and wherein the screw (55) comprises a screw head (70) and a retaining groove (71) such that the tongues (56) come to be housed in said groove (71), **characterized by** the protective cover (50) comprising at least one dismantling rib (76) inclined with respect to the axis (X') to allow the dismantling of the cover (50) with respect to the screw (55).

2. Rotating electrical machine according to Claim 1, **characterized in that** the tongue (56) bears against a shoulder (72) of the screw head (70) delimiting an axial end of the retaining groove (71).

3. Rotating electrical machine according to Claim 2, **characterized in that** the shoulder (72) extends by protruding substantially radially with respect to the axis (X') of the screw.

4. Rotating electrical machine according to any one of Claims 1 to 3, **characterized in that** the tongue (56) is flexible.

5. Rotating electrical machine according to any one of Claims 1 to 4, **characterized in that** the screw head (70) has an outer radial surface that is inclined with respect to the axis (X') and **in that** the tongue (56) has an inner radial surface, delimiting the central aperture (57), inclined with respect to the axis (X') in a way that complements the inclination of said outer surface of the screw head.

6. Rotating electrical machine according to Claim 5, **characterized in that** an aperture angle (A1) defined between two straight lines passing through the outer radial surface of the screw head (70), said straight lines being opposite one another with respect to the axis (X'), lies between 10° and 45°, and is preferably 30°.

7. Rotating electrical machine according to any one of the preceding claims, **characterized in that** a radial thickness (L4) of the dismantling rib (76) is at least equal to, preferably greater than, a radial thickness (L3) of the shoulder (72).

8. Rotating electrical machine according to any one of the preceding claims, **characterized in that** an angle of inclination (A2) of the dismantling rib (76) with respect to the axis (X') lies between 5 and 15 degrees and is preferably 10 degrees.

9. Rotating electrical machine according to any one of the preceding claims, **characterized in that** an axial length (L5) of the dismantling rib (76) lies between 2 mm and 6 mm and is preferably 4 mm.

10. Rotating electrical machine according to any one of Claims 1 to 9, **characterized in that** the tongue (56) is made from an end of a wall (61) extending from the aperture of the fastening zone so as to delimit a receiving well (62) for the screw head (70).
